# EUROPEAN PATENT SPECIFICATION

(11) **EP 1 688 304 B1**
(45) Date of publication and mention of the grant of the patent: **09.04.2008**
(21) Application number: 05002332.4
(22) Date of filing: 04.02.2005
(51) Int. Cl.: B60R 9/045

(54) **Load carrier for fixed roof rail**
Lastträger für feste Dachreling
Porte-charge pour galerie fixe de toit

(43) Date of publication of application: 09.08.2006
(73) Proprietor: Thule Sweden AB, 330 33 Hillerstorp (SE)
(72) Inventor: Larsson, Fredrik, 567 91 Vaggeryd (SE); Lenk, Wolf-Dietrich, 71679 Asperg (DE)
(74) Representative: Berglund, Stefan

(56) References cited:
- US-A- 5 556 221
- US-A1- 2004 074 939

## Description

### Technical field

The present invention refers to a load carrier for fixed roof rails of a vehicle, comprising a load carrier bar with a load carrier foot at each end of the load carrier bar for clamping the load carrier to a pair of essentially parallel roof rails, each load carrier foot comprising a fixed clamping jaw and a movable clamping jaw adapted to be arranged on an upper side and an opposite lower side of the respective roof rail and cooperating with a clamping device, which is arranged to move the movable clamping jaw towards the fixed clamping jaw in such way that the load carrier foot is firmly clamped at the respective roof rail, wherein the movable clamping jaw is pivotally connected at the load carrier foot and in a first mounting position is arranged in such way that the distance between the movable clamping jaws, which are located at each end of the load carrier, is less than the distance between the roof rails.

### State of the art and background of the invention

US 2004/ 0118886 previously discloses a load carrier of the introductory described kind. A load carrier foot of the previously known load carrier having an upper fixed clamping jaw and a movable hook with a lower clamping jaw, which cooperate with a lever for clamping the movable hook in such way that the clamping jaws being moved towards each other and the load carrier foot being firmly clamped at a roof rail of a vehicle.

Another load carrier is previously known by US 2004/0074939. This load carrier comprises also an upper fixed clamping jaw and a movable hook with a lower clamping jaw, which cooperate with a lever for clamping the movable hook in such way that the clamping jaws being moved towards each other and the load carrier foot being firmly clamped at a roof rail of a vehicle. In a mounting position, the movable hook may be arranged essential vertically, which admit that the load carrier being mounted vertically towards the roof rail.

The problem with a load carrier of known kind is that it may be difficult to fit the load carrier, in such way that the load carrier foot at each end of the load carrier bar, grips around respectively roof rail. Often the load carrier must be moved diagonally between two parallel roof rails and thereafter moved along one of the rails in such way that the load carrier bar will essentially become perpendicular to the roof rails, This movement may cause scratches on the roof rails. In addition, it may occur that the movable hook bits the roof of the vehicle during the montage and may then cause damage. In connection with lower roof rails it is a large risk that the movable hooks, which appear in the later reference, also hits the roof of the vehicle.

### Summary of the invention

The purpose with the present invention is to minimize the risk of damage on the vehicle during the montage to the load carrier and to simplify correct location of the load carrier perpendicular to the roof rails of the vehicle.

The present invention overcome the above mentioned disadvantages with a load carrier of introductory mentioned kind, which is characterized in that the movable clamping jaw is essentially firmly connected to at least one guiding protrusion, located on a distance from the movable clamping jaw and in a first mounting position arranged in such way that the distance between the guiding protrusions, which are located at each end of the load carrier, is larger than the distance between the roof rails.

Preferred embodiments of the invention are defined in the dependent claims 2 - 10.

### Brief description of the figures

A load carrier foot according to the present invention will be described further with reference to the accompanying drawings, in which:
Figure 1 is a schematic view in perspective of a load carrier foot according to the present invention,
Figure 2 is a schematic view in perspective of the load carrier foot, in an open position and without any exhaustive cover,
Figure 3 is a schematic side view of the load carrier foot before montage to a roof rail,
Figure 4 is a schematic side view of the load carrier foot during montage to the roof rail, and
Figure 5 is a schematic side view of the load carrier foot after montage to the roof rail.

### Preferred embodiment

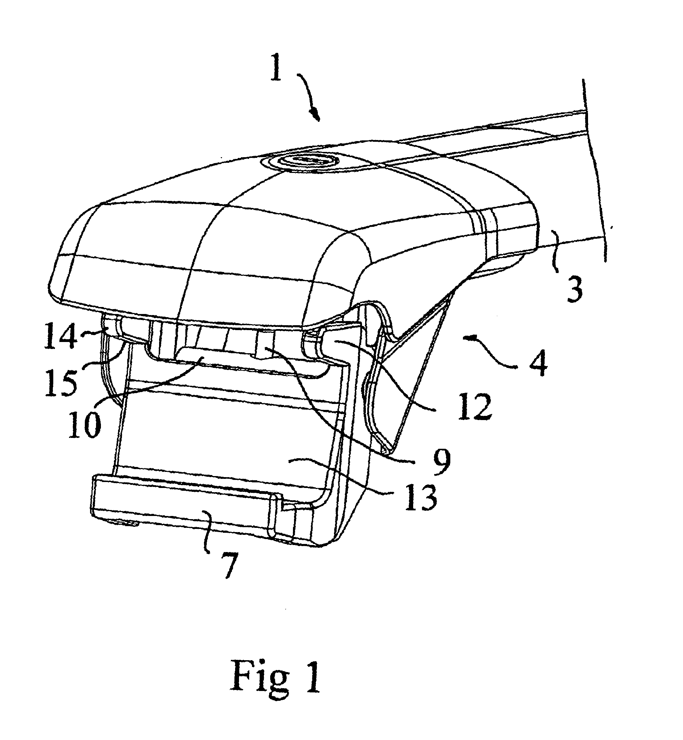

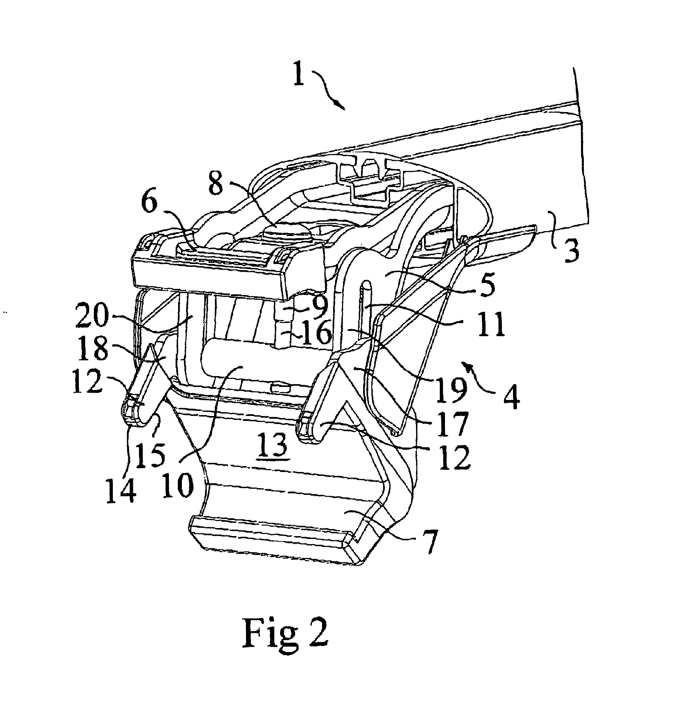

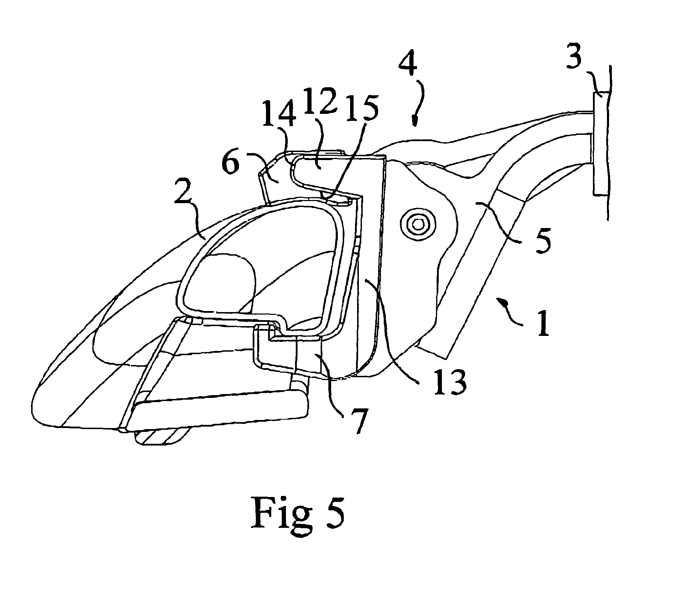

The load carrier 1, shown in figure 1 to 5, is intended to be mounted at a pair of fixed roof rails 2 of a vehicle (not showed). In the figures only one end of a load carrier 1 being showed and to clearly illustrate the invention, it is shown without any exhaustive cover in figure 2 to 5. The load carrier 1 comprises a load carrier bar 3, which extend across the roof of the vehicles between two parallel, along the roof of the vehicle firmly arranged roof rails. The carrier bar having one in each end arranged load carrier foot 4, for clamping of the load carrier 1 to the parallel roof rails 2, The load carrier bar 3 may, of cause, have suitable cross section, for example square profile or oval profile.

The load carrier foot 4 comprising a body 5, preferably made of metal, which is connected to the load carrier bar 3. The body 5 having a fixed clamping jaw 6 and a movable clamping jaw 7 arranged on opposite upper side and lower side of the respective roof rail 2 and cooperates with a clamping device 8, which is arranged to move the movable clamping jaw 7 towards the fixed clamping jaw 6, wherein the load carrier foot 4 being firmly clamped to the roof rail 2.

The movable clamping jaw 7 is pivotally connected to the load carrier foot 4 and is in a first mounting position arranged in such way that the distance between the movable clamping jaws 7, which are located in each end of the load carrier 1, is less than the distance between the roof rails 2, which is located on each side of the vehicle.

The clamping device 8 comprising in the embodiment shown a bolt 9, which extend through a hole in the body to a threaded hole in a axle 10, which axle runs in a groove 11 through the body 5 and which is pivotally mounted to the movable clamping jaw 7. Preferably, the bolt 9 having a non-threaded portion 16 with a reduced diameter, which portion freely passing through the threaded hole in the axle 10. During montage to the load carrier foot, the axle 10 slides along the non-threaded portion 16 into engagement with the threads of the bolt 9. When the bolt 9 is tightened, the axle 10 is moved further along the groove 11 and raising the movable clamping jaw 7 in direction towards the fixed clamping jaw 6. Thus, the non-threaded portion reduces the number of rotations that the bolt must be turned during the montage. The axle 10 will during dismantling fall along the non-threaded portion 16 by its own weight.

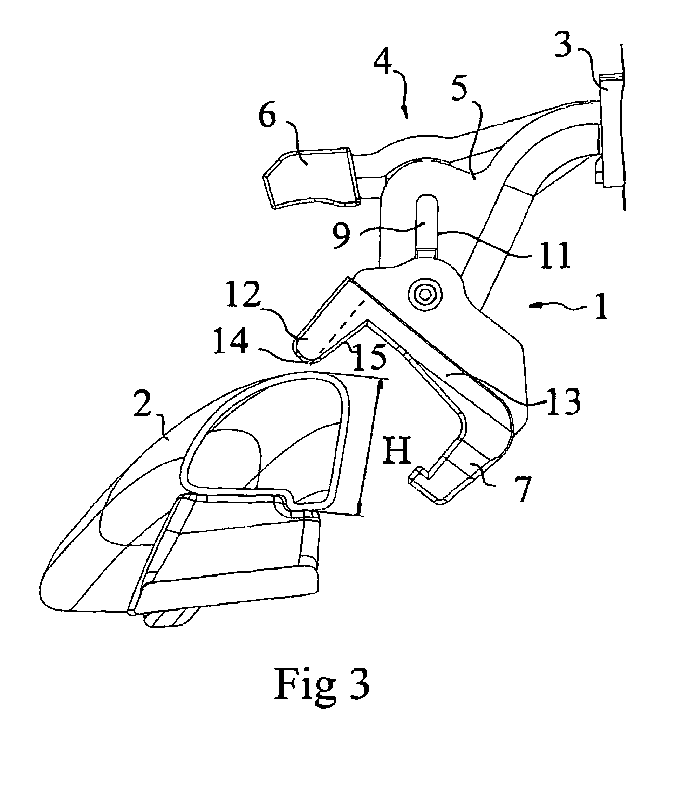

To facilitate montage of the load carrier 1 the movable clamping jaw 7 is part of an essential U-shaped profile, comprising at least an upper shank or guiding protrusion 12, a waist 13, or a main body, and the lower clamping jaw 7. Preferably, the U-shaped profile has a substantial lengthwise extension in the direction of the vehicle and having a guiding protrusion 12 in each end of the profile. The distance between the clamping jaw 7 and the guiding protrusion 12 is chosen such that the roof rail 2 runs freely between these, and preferably it is equal to 1,05 - 1,60 times the height of the roof rails and especially 1,1 - 1,2 times this height. The height of the roof rails is equal to the vertical distance H (figure 3) through the profile of the roof rail. In the embodiment shown, the movable clamping jaw 7 is essentially integrated with at least one guiding protrusion 12, which is located on a fixed distance from the movable clamping jaw. However, it should also be possible to design the U-shaped profile in such way that the distance between the clamping jaw 7 and the guiding protrusion 12 is adjustable.

Preferably, the waist 13 is provided with side plates 17 and 18, which are arranged to abut against corresponding sidewalls 19 and 20 of the body 5. Thus, providing a rigid box construction, which essentially increases the possible twisting forces that the load carrier resist.

Preferably, the axle 10 is pivotally mounted in the waist 13 of the U-shaped profile in such way that the U-shaped profile, before the montage, falls with its opening between the clamping jaw 7 and the guiding protrusion 12 in a direction downwards towards the roof rail 2. In other words, the connection is some displaced from the centre of rotation in direction away from the opening between the clamping jaw 7 and the guiding protrusion 12. Preferably, the axle 10 is thus mounted at the side plates 17 and 18.

The invention will now be explained closer with reference to figure 3 to 5, which disclose different steps during the montage of the load carrier to the roof rails. Firstly, as appear from figure 3, the load carrier 1 is held above and in correct angle towards the roof rails 2. The U-shaped profile will hang in its bottom position in the groove 11 and with the opening between the clamping jaw 7 and guiding protrusion 12 directed towards the roof rail 2, whereupon it will then be lowered to abutment against the outer portion 14 of the guiding protrusion 12. In this first mounting position, the distance between the guiding protrusions 12, which are located in each end of the load carrier 1, is larger than the distance between the roof rails 2, which are located on each side of the vehicle.

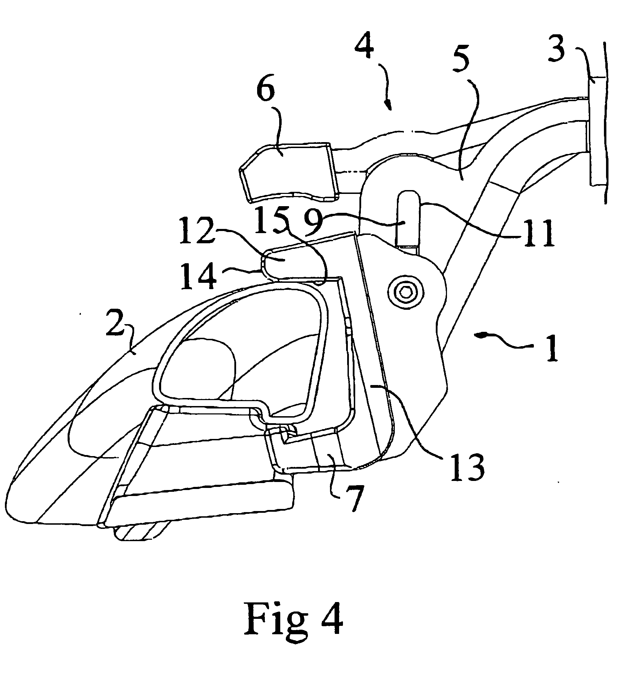

Secondly, as appear from figure 4, the guiding protrusion 12 will slide against the roof rail 2 along a lower abutting surface 15 of the guiding protrusion 12. This abutting surface 15 may be inclined so that the opening between the clamping jaw 7 and the guiding protrusion 12 tapers inwardly, see figure 3, to facilitate the movement, wherein the U-shaped profile is turned around the axle 10, in such way that the movable clamping jaw 7 is moved in position beneath the roof rail 2. By the fact that the load carrier 1 with the projecting guiding protrusions 12 is longer than the distance between the roof rails, it is no risk that the load carrier 1 may hit the roof of the vehicle.

The guiding protrusions 12 rest against the roof rail 2 and the side plates 17 and 18 of the U-shaped profile will slide against the side walls 19 and 20 of the body, together with the axle 10, which follows the groove 11 until the fixed clamping jaw 6 abuts against the roof rail 2. Simultaneously the axle 10 runs along the non-threaded portion 16 to engagement with the threads of the bolt 9. By tightening the bolt 9 the movable clamping jaw 7 will also raise to abutment against the lower side of the roof rails and thereby being firmly clamped against this.

Thus, the load carrier foot 4 is firmly clamped to the roof rail 2 by the fixed clamping jaw 6 and the movable clamping jaw 7, which are located on opposite sides of the roof rail 2. Thus, in its clamped position the guiding protrusions are not in engagement with the roof rail 2. The substantial with the present invention is that the movable clamping jaw 7 passing the roof rail 2 with clearance and during montage being turned into engagement with the roof rail 2.

Naturally, the above described twisting may be performed in another way than disclosed in the figures. For example, the clamping jaw may be parallel with the roof rail and during montage being turned in engagement transversely to the roof rail. However, this is not preferred, as such twisting restrict possible montage in vicinity of the fixation points of the roof rails.

## Claims

1. Load carrier (1) for fixed roof rails (2) of a vehicle, comprising a load carrier bar (3) with a load carrier foot (4) at each end of the load carrier bar (3) for clamping of the load carrier to a pair of essentially parallel roof rails,
each load carrier foot (4) comprising a fixed clamping jaw (6) and a movable clamping jaw (7) adapted to be arranged on an upper side and an opposite lower side of the respective roof rails and cooperating with a clamping device (8), which is arranged to move the movable clamping jaw (7) towards the fixed clamping jaw (6) in such way that the load carrier foot (4) is firmly clamped at respectively roof rail,
wherein the movable clamping jaw (7) is pivotally connected at the load carrier foot (4) and in a first mounting position is arranged in such way that the distance between the movable clamping jaws (7), which are located at each end of the load carrier (1), is less than the distance between the roof rails, **CHARACTERIZED in that** the movable clamping jaw (7) is essentially firmly connected to at least one guiding protrusion (12), located on a distance from the movable clamping jaw (7) and in a first mounting position arranged in such way that the distance between the guiding protrusions (12) , which are located at each end of the load carrier (1), is larger than the distance between the roof rails.

2. Load carrier according to claim 1, **CHARACTERIZED in that** the movable clamping jaw (7) via an axle (10) is pivotally mounted to a body (5) of the load carrier foot (4).

3. Load carrier according to claim 1 or 2, **CHARACTERIZED in that** the movable clamping jaw (7) is part of an essentially U-shaped profile, comprising at least said upper guiding protrusion (12) and **in that** the U-shaped profile is rotatable around the axle (10), in such way that the movable clamping jaw (7) is movable in position under the roof rail (2).

4. Load carrier according to claim 3, **CHARACTERIZED in that** the guiding protrusion (12) during montage is arranged to slide against the roof rail (2) along a lower abutting surface (15) of the guiding protrusion (12).

5. Load carrier according to claim 4, **CHARACTERIZED in that** the abutting surface (15) of the guiding protrusion (12) is inclined.

6. Load carrier according to any of the claims 2 to 5, **CHARACTERIZED in that** the axle (10) runs in a groove (11) through the body (5).

7. Load carrier according to claim 6, **CHARACTERIZED in that** the clamping device (8) is arranged to move the axle (10) along the groove (11) and to raise the movable clamping jaw (7) in direction towards the fixed clamping jaw (6).

8. Load carrier according to any of the claims 1 to 7, **CHARACTERIZED in that** the distance between the clamping jaw (7) and the guiding protrusion (12) being equal to 1,05-1,60 times the height of the roof rails and especially 1,10-1,20 times this height.

9. Load carrier according to claim 8, **CHARACTERIZED in that** the distance between the movable clamping jaw (7) and guiding protrusion (12) is adjustable.

10. Load carrier according to any of the claims 3 to 9, **CHARACTERIZED in that** the axle (10) is pivotally mounted in a waist (13) of the U-shaped profile and **in that** the connection is somewhat displaced from the centre of rotation in a direction away from the opening between the clamping jaw (7) and the guiding protrusion (12) in such way that the U-shaped profile, prior montage, will fall with its opening between the clamping jaw (7) and guiding protrusion (12) in direction downwards towards the roof rail (2).

## Patentansprüche

1. Lastträger (1) für befestigte Dachschienen (2) eines Fahrzeugs, umfassend eine Lastträgerstange (3) mit einem Lastträgerfuß (4) an jedem Ende der Lastträgerstange (3) zum Festklemmen des Lastträgers an einem Paar im Wesentlichen paralleler Dachschienen, wobei jeder Lastträgerfuß (4) eine befestigte Klemmbacke (6) und eine bewegbare Klemmbacke (7) umfasst, die dafür vorgesehen sind, an einer Oberseite und einer gegenüberliegenden Unterseite der entsprechenden Dachschienen angeordnet zu werden und mit einer Klemmeinrichtung (8) zusammenzuwirken, die dafür vorgesehen ist, die bewegbare Klemmbacke (7) so zu der befestigten Klemmbacke (6) zu bewegen, dass der Lastträgerfuß (4) fest an der entsprechenden Dachschiene festgeklemmt wird, wobei die bewegbare Klemmbacke (7) schwenkbar mit dem Lastträgerfuß (4) verbunden ist und in einer ersten Montageposition so angeordnet ist, dass der Abstand zwischen den bewegbaren Klemmbacken (7), die an jedem Ende des Lastträgers (1) angeordnet sind, geringer als der Abstand zwischen den Dachschienen ist, **dadurch gekennzeichnet, dass** die bewegbare Klemmbacke (7) im Wesentlichen fest mit wenigstens einem Führungsvorsprung (12) verbunden ist, der von der bewegbaren Klemmbacke (7) beabstandet angeordnet ist und in einer ersten Montageposition so angeordnet ist, dass der Abstand zwischen den Führungsvorsprüngen (12), die an jedem Ende des Lastträgers (1) angeordnet sind, größer als der Abstand zwischen den Dachschienen ist.

2. Lastträger nach Anspruch 1, **dadurch gekennzeichnet, dass** die bewegbare Klemmbacke (7) über eine Achse (10) schwenkbar an einem Körper (5) des Lastträgerfußes (4) angebracht ist.

3. Lastträger nach Anspruch 1 oder 2, **dadurch gekennzeichnet, dass** die bewegbare Klemmbacke (7) Teil eines im Wesentlichen U-förmigen Profils ist, das wenigstens den oberen Führungsvorsprung (12) umfasst, und dass das U-förmige Profil so um die Achse (10) drehbar ist, dass die bewegbare Klemmbacke (7) in ihrer Position unter die Dachschiene (2) bewegbar ist.

4. Lastträger nach Anspruch 3, **dadurch gekennzeichnet, dass** der Führungsvorsprung (12) während der Montage so angeordnet ist, dass er an der Dachschiene (2) entlang einer unteren anliegenden Oberfläche (15) des Führungsvorsprungs (12) gleitet.

5. Lastträger nach Anspruch 4, **dadurch gekennzeichnet, dass** die anliegende Oberfläche (15) des Führungsvorsprungs (12) geneigt ist.

6. Lastträger nach einem der Ansprüche 2 bis 5, **dadurch gekennzeichnet, dass** die Achse (10) in einer Nut (11) durch den Körper (5) läuft.

7. Lastträger nach Anspruch 6, **dadurch gekennzeichnet, dass** die Klemmeinrichtung (8) dafür vorgesehen ist, die Achse (10) entlang der Nut (11) zu bewegen und die bewegbare Klemmbacke (7) in der Richtung zu der befestigten Klemmbacke (6) anzuheben.

8. Lastträger nach einem der Ansprüche 1 bis 7, **dadurch gekennzeichnet, dass** der Abstand zwischen der Klemmbacke (7) und dem Führungsvorsprung (12) gleich dem 1,05- bis 1,60-fachen der Höhe der Dachschienen und insbesondere gleich dem 1,10- bis 1,20-fachen dieser Höhe ist.

9. Lastträger nach Anspruch 8, **dadurch gekennzeichnet, dass** der Abstand zwischen der bewegbaren Klemmbacke (7) und dem Führungsvorsprung (12) einstellbar ist.

10. Lastträger nach einem der Ansprüche 3 bis 9, **dadurch gekennzeichnet, dass** die Achse (10) schwenkbar in einem Mittelstück (13) des U-förmigen Profils angebracht ist und dass die Verbindung etwas von dem Rotationszentrum verschoben ist, in einer Richtung weg von der Öffnung zwischen der Klemmbacke (7) und dem Führungsvorsprung (12), so dass das U-förmige Profil vor der Montage mit seiner Öffnung zwischen die Klemmbacke (7) und den Führungsvorsprung (12) in einer Abwärtsrichtung zu der Dachschiene (2) fällt.

## Revendications

1. Porte-charge (1) pour galerie fixe de toit (2) d'un véhicule, comprenant une barre porteuse (3) munie d'un pied porteur (4) à chaque extrémité de la barre porteuse (3) pour fixer le porte-charge sur une paire de longerons de toit essentiellement parallèles,
chaque pied porteur (4) comprend une mâchoire de serrage fixe (6) et une mâchoire de serrage mobile (7) adaptées pour être disposées sur un côté supérieur et sur un côté inférieur opposé des longerons respectifs de toit et pour coopérer avec un dispositif de serrage (8), qui est conçu pour déplacer la mâchoire de serrage mobile (7) vers la mâchoire de serrage fixe (6) de telle manière que le pied porteur (4) soit solidement fixé sur le longeron respectif de toit,
dans lequel la mâchoire de serrage mobile (7) est raccordée de manière pivotante au pied porteur (4) et dans une première position de montage est disposée de telle manière que la distance entre les mâchoires de serrage mobiles (7), qui sont situées à chaque extrémité du porte-charge (1), soit inférieure à la distance entre les longerons de toit, **caractérisé en ce que** la mâchoire de serrage mobile (7) est raccordée de manière essentiellement solide à au moins une saillie de guidage (12), située à une distance de la mâchoire de serrage mobile (7) et disposée, dans une première position de montage, de telle manière que la distance entre les saillies de guidage (12), qui sont situées à chaque extrémité du porte-charge (1), soit supérieure à la distance entre les longerons de toit.

2. Porte-charge selon la revendication 1, **caractérisé en ce que** la mâchoire de serrage mobile (7) est montée, par l'intermédiaire d'un axe (10), de manière pivotante sur un corps (5) du pied porteur (4).

3. Porte-charge selon la revendication 1 ou 2, **caractérisé en ce que** la mâchoire de serrage mobile (7) fait partie d'un profil essentiellement en U, comprenant au moins ladite saillie supérieure de guidage (12) et **en ce que** le profil en U peut tourner autour de l'axe (10), de telle manière que la mâchoire de serrage mobile (7) puisse se déplacer dans une position en dessous du longeron de toit (2).

4. Porte-charge selon la revendication 3, **caractérisé en ce que** la saillie de guidage (12) est conçue pour coulisser pendant le montage contre le longeron de toit (2) le long d'une surface inférieure de butée (15) de la saillie de guidage (12).

5. Porte-charge selon la revendication 4, **caractérisé en ce que** la surface de butée (15) de la saillie de guidage (12) est inclinée.

6. Porte-charge selon l'une quelconque des revendications 2 à 5, **caractérisé en ce que** l'axe (10) passe dans une rainure (11) à travers le corps (5).

7. Porte-charge selon la revendication 6, **caractérisé en ce que** le dispositif de serrage (8) est conçu pour déplacer l'axe (10) le long de la rainure (11) et pour lever la mâchoire de serrage mobile (7) en direction de la mâchoire de serrage fixe (6).

8. Porte-charge selon l'une quelconque des revendications 1 à 7, **caractérisé en ce que** la distance entre la mâchoire de serrage (7) et la saillie de guidage (12) est égale à 1,05 - 1,60 fois la hauteur des longerons de toit et est égale en particulier à 1,10 - 1,20 fois cette hauteur.

9. Porte-charge selon la revendication 8, **caractérisé en ce que** la distance entre la mâchoire de serrage mobile (7) et la saillie de guidage (12) est réglable.

10. Porte-charge selon l'une quelconque des revendications 3 à 9, **caractérisé en ce que** l'axe (10) est monté de manière pivotante dans une cambrure (13) du profil en U et **en ce que** le raccordement est légèrement décalé par rapport au centre de rotation dans une direction s'éloignant de l'ouverture entre la mâchoire de serrage (7) et la saillie de guidage (12) de telle sorte que le profil en U, avant le montage, tombe avec cette ouverture entre la mâchoire de serrage (7) et la saillie de guidage (12) dans une direction descendante vers le longeron de toit (2).
